# EUROPEAN PATENT APPLICATION

(11) **EP 2 244 277 A2**
(43) Date of publication of application: **27.10.2010**
(21) Application number: 10008472.2
(22) Date of filing: 25.07.2007
(51) Int. Cl.: H01J 1/304, H01J 9/02

(54) **Method of manufacturing a field emitter electrode using an array of nanowires**

(30) Priority: 08.08.2006 KR 20060074800
(62) Divisional of application: 07793238.2
(71) Applicant: Korea Advanced Institute of Science and Technology (KAIST), Yusong-gu Taejon 305-701 (KR)
(72) Inventor: The designation of the inventor has not yet been filed
(74) Representative: Grünecker, Kinkeldey, Stockmair & Schwanhäusser Anwaltssozietät

(57) **Abstract**

The present invention relates to a method for manufacturing a field emitter electrode, in which nanowires are aligned horizontally, perpendicularly or at any angle between horizontal and perpendicular according to the direction of a generated electromagnetic field. More particularly, the present invention relates to a method for manufacturing a field emitter electrode having nanowires aligned horizontally, perpendicularly or at any angle between horizontal and perpendicular according to the direction of a generated electromagnetic field, the method comprising the steps of diluting nanowires in a solvent, dispersing the resulting solution on a substrate fixed to the upper part of an electromagnetic field generator, and fixing the nanowires aligned in the direction of an electromagnetic field generated from the electromagnetic field generator. According to the present invention, a high capacity field emitter electrode having high density nanowires aligned according to the direction of a generated electromagnetic field can be fabricated by a simple process and nanowires can be used as positive electrode materials for field emission displays (FEDs), sensors, electrodes, backlights and the like.

## Description

### TECHNICAL FIELD

The present invention relates to a method for manufacturing a field emitter electrode, in which nanowires are aligned horizontally, perpendicularly or at any angle between horizontal and perpendicular according to the direction of a generated electromagnetic field. More particularly, the present invention relates to a method for manufacturing a field emitter electrode having nanowires aligned horizontally, perpendicularly or at any angle between horizontal and perpendicular according to the direction of a generated electromagnetic field, the method comprising the steps of diluting nanowires in a solvent, dispersing the resulting solution on a substrate fixed to the upper part of an electromagnetic field generator, and fixing the nanowires aligned in the direction of an electromagnetic field generated from the electromagnetic field generator.

### BACKGROUND ART

Generally, a field emission device is a light source based on electron emission in vacuum and refers to an element which emits light according to the principle that electrons emitted from microparticles are accelerated by a strong electric field to impinge upon fluorescent materials. The above-mentioned field emission device has advantages such as excellent light emitting efficiency and capability of realizing light-weight and compactness as compared to conventional illumination light sources such as an incandescent bulb, as well as environmental friendliness due to no use of heavy metals unlike fluorescent lamps. Thus, it has received a great deal of attention as a next generation light source for use in a variety of illumination fields and display devices.

The performance of field emission devices significantly depends on the emitter electrode's capability to emit an electric field. Recently, nanowires having the property that aspect ratio(=length/diameter) thereof is more than several thousands have been actively used as the electron emitting material for an emitter electrode having excellent electron emission characteristics.

Methods for applying said nanowires to a field emitter electrode can be divided into two categories, which are thin film processes using chemical vapor deposition and thick film processes using screen printing. However, these processes have problems, that is, the thin film process has an advantage in that the process becomes simple by directly growing a film on a substrate, but problem occurs when a large scale display is required. In particular, the followings are main problems; the ununiform temperature, deformation, and length control of glass substrates during film growth, and exfoliation caused by temperature upon growing metal electrode. Meanwhile, the thick process using several to several tens µm of conductive metals (e.g., Ag, Mo, W and Mo/Mn) by pasting or slurrying them can be easily used for a large scale field emission array, but has a problem in that the process is complicate and it is difficult to secure a vaccum state which is important for displaying processes because of gas emittimg from organic materials contained in paste in a vaccum state.

Thus, there is an urgent need to develop a method for manufacturing a field emitter electrode, which employs a simple manufacturing process and in which nanowires are aligned in a specific direction at high density on a large scale.

Accordingly, the present inventors have made extensive efforts to solve the problems occurring in the prior methods for aligning nanowires. As a result, the present inventors have found that, when nanowires are aligned on a substrate fixed to the upper part of an electromagnetic field generator, and then fixed using a metal, it is possible to fabricate a field emitter electrode having nanowires aligned at high density over a large area, thereby completing the present invention.

### SUMMARY OF THE INVENTION

Therefore, it is an object of the present invention to provide a field emitter electrode having an excellent field emission characteristic, in which nanowires aligned at high density over a large area are fixed on a substrate with a metal, as well as a manufacturing method thereof.

To achieve the above object, the present invention provides a method for manufacturing a field emitter electrode including nanowires aligned horizontally, perpendicularly or at any angle between horizontal and perpendicular according to the direction of a magnetic field, the method comprising the steps of: (a) dispersing a solution of nanowires or magnetic particle-bound nanowires diluted in an organic solvent, on a substrate fixed to the upper part of a magnetic field generator; (b) aligning the nanowires in a magnetic field generated from the magnetic field generator, horizont ally, perpendicularly or at any angle between horizontal and perpendicular according to the direction of the magnetic field by evaporating the organic solvent from the solution dispersed on the substrate; and (c) depositing a metal on the substrate, in order for the nanowires aligned horizontally, perpendicularly or at any angle between horizontal and perpendicular according to the direction of the generated magnetic field to be fixed in the aligned direction even in magnetic field-free conditions.

The present invention provides, in one aspect, a method for manufacturing a field emitter electrode including nanowires aligned horizontally, perpendicularly or at any angle between horizontal and perpendicular according to the direction of a electric field, the method comprising the steps of: (a) dispersing a solution of nanowires diluted in an organic solvent, on a substrate fixed to the upper part of an electric field generator; (b) aligning the nanowires on the substrate in an electric field generated from the electric field generator, horizontally, perpendicularly or at any angle according to the direction of the generated electric field by evaporating the organic solvent from the solution dispersed on the substrate; and (c) depositing a metal on the substrate, in order for the nanowires aligned horizontally, perpendicularly or at any angle according to the direction of the generated electric field to be fixed in the aligned direction even in electric field-free conditions.

The present invention provides, in another aspect, a filed emitter electrode including magnetic particle-bound nanowires aligned horizontally, perpendicularly or at any angle between horizontal and perpendicular according to the direction of a magnetic field, on a metal-depositting substrate, which are prepared by said method.

The above and other objects, features and embodiments of the present invention will be more clearly understood from the following detailed description and accompanying claims.

### DETAILED DESCRIPTION OF THE INVENTION, AND

### PREFERRED EMBODIMENTS

Nanowires are generally nanosize (nm. 10⁻⁹m) materials which have optical property resulting from chemical reaction on a surface and defects on the surface, and excellent electrical and thermal conductivity due to a large ratio of surface to mass. Thus, it is possible to manufacture a field emitter electrode having excellent metal nanowires comprising an array.

In one aspect, the present invention realtes to a method for manufacturing a field emitter electrode including nanowires aligned horizontally, perpendicularly or at any angle between horizontal and perpendicular according to the direction of magnetic field, the method comprising the steps of: (a) dispersing a solution of nanowires or magnetic particle-bound nanowires diluted in an organic solvent, on a substrate fixed to the upper part of a magnetic field generator; (b) aligning the nanowires on the substrate in a magnetic field generated from the magnetic field generator, horizont ally, perpendicularly or at any angle between horizontal and perpendicular according to the direction of the magnetic field by evaporating the organic solvent from the solution dispersed on the substrate; and (c) depositing a metal on the substrate, in order for the nanowires aligned horizontally, perpendicularly or at any angle between horizontal and perpendicular according to the direction of the generated magnetic field to be fixed in the aligned direction even in magnetic field-free conditions.

Nonowires are manufactured using hexagonal and cubic nanostructures of self assembled supermolecules by a method in which metal ions are bound to supermolecules capable of self-assembling, which have a functional group, to prepare a complex of the supermoleculs and metal ions, and then a complex thin film thereof is formed on a substrate, wherein the organic molecules preferably have a cylinderical structure by self-assembly.

In the present invention, the magnetic particle-bound nanowires are preferably obtained by binding the magnetic particles to the nanowires using a physical-chemical method, and the physical-chemical method is preferably selected from the group consisting of a method of treating the nanowires with acid, a method of subjecting the magnetic particles to a reduction reaction, and a method of plating the magnetic particles on the nanowires. In the present invention, the magnetic particles are preferably iron (Fe)-containing particles.

In another aspect, the present invention relates to a method for manufacturing a field emitter electrode including nanowires aligned horizontally, perpendicularly or at any angle between horizontal and perpendicular according to the direction of an electric field, the method comprising the steps of: (a) dispersing a solution of nanowires diluted in an organic solvent, on a substrate fixed to the upper part of an electric field generator; (b) aligning the nanowires on the substrate in an electric field generated from the electric field generator, horizontally, perpendicularly or at any angle according to the direction of the generated electric field by evaporating the organic solvent from the solution dispersed on the substrate; and (c) depositing a metal on the substrate, in order for the nanowires aligned horizontally, perpendicularly or at any angle according to the direction of the generated electric field to be fixed in the aligned direction even in electric field-free conditions.

In the present invention, the electric field generator in the step (a) is preferably an electric field, and the electric field preferably has a magnitude of 1 ∼ 50V/mm.

In the present invention, the step (a) preferably additionally comprises adding a dispersion aid for solvent, and the dispersion aid for solvent is preferably selected from the group consisting of organic solvent TOAB (tetraoctylammonium bromide), and surfactants Triton X-100 and SDS (sodium dodecylsurfate).

In the present invention, the step (a) of dispersing the solution of nanowires diluted in the organic solvent, on the substrate fixed to the upper part of the electric field generator, is preferably carried out using a method selected from the group consisting of a spin coating method, a spray method, a dip coating method, and an inkjet method, and the steps (a) and (b) are preferably repeated 5-1000 times to increase the density of the nanowires.

In the present invention, the solvent in the step (a) is preferably selected from the group consisting of water (H₂O), dimethylformamide (DMF), N-methyl-2-pyrrolidone (NMP), dimethylacetamide (DMAc), cyclohexanone, ethyl alcohol, chloroform, dichloromethane, 1,2-dichlorobenzene and ethyl ether, and the substrate in the step (a) is selected from the group consisting of indium tin oxide (ITO) glass, glass, quartz, glass wafers, silicon wafers, applied silica, plastics, and transparent polymers.

In the present invention, the concentration of the nanowires in the nanowire dispersion in the step (a) is preferaby 0.01-1.0 wt%, and the solvent in the step (b) is prefarably removed by heating the solution to a temperature of 50-150 °C.

In the present invention, the amount of the nanowires dispersed on the substrate in the step (a) is preferably 1 pg/cm²-1 g/cm² (amount of nanowires per unit area), and the metal in the step (c) is preferably deposited to a thickness of 1-5000 nm.

In the present invention, the metal in the step (c) is preferably selected from the group consisting of titanium (Ti), molybdenum (Mo), gold (Au), silver (Ag), aluminum (Al), calcium (Ca), cadmium (Cd), iron (Fe), nickel (Ni), platinum (Pt), zinc (Zn) and copper (Cu).

In still another aspect, the present invention relates to a filed emitter electrode including magnetic particle-bound nanowires aligned horizontally, perpendicularly or at any angle between horizontal and perpendicular according to the direction of a magnetic field on a metal-depositting substrate, which is prepared by said method.

The method for manufacturing the field emitter electrode will be described in further detail by five steps.

### Step 1: Preparation of nanowires

Nonowires used in the present invention are manufactured using hexagonal and cubic nanostructures of self assembled supermolecules by a method in which metal ions are bound to supermolecules capable to self-assemblying, which have a functional group, to prepare a complex of the supermoleculs and metal ions, and then a complex thin film thereof is formed on a substrate, followed by heat treatment and reduction such that the organic molecules have a cylinderical structure by self-assembly.

### Step 2: Binding of magnetic particles to nanowires

In order to bind magnetic particles to the nanowires prepared in the step 1, iron chloride (FeCl₃), ferrous oxide (FeO), ferric oxide (Fe₂O₃) and triiron tetroxide (Fe₃O₄) are added to a mixture of ethanol, distilled water and hexane and heated to prepare an iron-oleate complex. The prepared iron-oleate complex is mixed with oleic acid and dimethylformamide (DMF), and nanowires prepared in the step 1 are added to the mixture. The mixture containing the nanowires added thereto is completely dissolved in 1-octadecene and then heated to evaporate the solvents from the mixture. The remaining material is washed 3-4 times with ethanol, thus preparing nanowires having magnetic particles bound thereto.

### Step 3: Dispersion of magnetic particle-bound nanowires on substrate

The magnetic particle-bound nanowires prepared in the step 2 are diluted in at least one solvent selected from the group consisting of dimethylformamide (DMF), N-methyl-2-pyrrolidone (NMP), dimethylacetamide (DMAc), cyclohexanone, ethyl alcohol, chlorobenzene, 1,2-dichlorobenzene and chloroform. Then, the dispersion of the magnetic particle-bound nanowires is dropped in an amount of 0.01∼0.5wt% on an indium tin oxide (ITO) glass substrate fixed to the upper part of a magnet having a magnetic field, and the solvent is allowed to evaporate.

### Step 4: Increasing density of magnetic particle-bound nanowires on substrate

On the indium tin oxide (ITO) glass substrate prepared in the step 3, from which the solvent completely evaporated, 1-2 drops of the dispersion of the magnetic particle-bound nanowires diluted in the solvent are added, and then the solvent is allowed to evaporate in high-temperature condition. To increase the density of the magnetic particle-bound nanowires, the above step can be repeated 5-20 times. By doing so, the magnetic particle-bound nanowires prepared according to the above method are aligned in the direction of the magnetic field generated from the magnet.

### Step 5: Fixing magnetic particle-bound nanowires on substrate

In order for the nanowires aligned horizontally, perpendicularly or at any angle between horizontal and perpendicular by the magnetic field in the step 4 to be aligned in the aligned direction even in magnetic field-free conditions, a metal selected from the group consisting of titanium (Ti), molybdenum (Mo), gold (Au), aluminum (Al), calcium (Ca), cadmium (Cd), iron (Fe), nickel (Ni), platinum (Pt), zinc (Zn) and copper (Cu) is deposited on the substrate, thus fabricating a pure field emitter electrode.

In the above description, only the method comprising using the magnet as the electromagnetic field generator and aligning the nanowires by binding magnetic particles thereto has been described in detail. However, through the above description, it is possible that the electric field generator is an electric field, and the field emitter electrode can be manufactured either by aligning the nanowires on the substrate by adding a surfactant to the solution of the nanowires, or by aligning pure nanowires on the substrate fixed to the upper part of the electromagnetic field generator.

### INDUSTRIAL APPLICABILITY

As described above, according to the present invention, an inherent property, high field emission effect of high density nanowires aligned over a large area horizontally, perpendicularly or at any angle between horizontal and perpendicular according to the direction of a generated electromagnetic field can be used to manufacture a field emitter electrode having a greatly improved field emission effect. The field emitter electrode manufactured according to the method of the present invention can be used as a field emitter electrode for displays, and can also be applied in scanning electron microscopes (SEM) and transmission electron microscopes (TEM), which employ field emission phenomena.

While the present invention has been described with reference to the particular illustrative embodiment, it is not to be restricted by the embodiment but only by the appended claims. It is to be appreciated that those skilled in the art can change or modify the embodiment without departing from the scope and spirit of the present invention.

In particular, the present invention is concerned with the following embodiments:
1. A method for manufacturing a field emitter electrode including nanowires aligned horizontally, perpendicularly or at any angle between horizontal and perpendicular according to the direction of a magnetic field, the method comprising the steps of:
   (a) dispersing a solution of nanowires or magnetic particle-bound nanowires diluted in an organic solvent, on a substrate fixed to the upper part of a magnetic field generator;
   (b) aligning the nanowires on the substrate in a magnetic field generated from the magnetic field generator, horizontally, perpendicularly or at any angle between horizontal and perpendicular according to the direction of the magnetic field by evaporating the organic solvent from the solution dispersed on the substrate; and
   (c) depositing a metal on the substrate, in order for the nanowires aligned horizontally, perpendicularly or at any angle between horizontal and perpendicular according to the direction of the generated magnetic field to be fixed in the aligned direction even in magnetic field-free conditions.
2. The method for manufacturing a field emitter electrode according to embodiment 1, wherein the magnetic particle-bound nanowires are obtained by binding the magnetic particles to the nanowires using a physical-chemical method.
3. The method for manufacturing a field emitter electrode according to embodiment 2, wherein the physical-chemical method is selected from the group consisting of a method of treating the nanowires with acid, a method of subjecting the magnetic particles to a reduction reaction, and a method of plating the magnetic particles on the nanowires.
4. The method for manufacturing a field emitter electrode according to any one embodiment among embodiments 1 to 3, wherein the magnetic particles are iron (Fe)-containing particles.
5. A method for manufacturing a field emitter electrode including nanowires aligned horizontally, perpendicularly or at any angle between horizontal and perpendicular according to the direction of a electric field, the method comprising the steps of:
   (a) dispersing a solution of nanowires diluted in an organic solvent, on a substrate fixed to the upper part of an electric field generator;
   (b) aligning the nanowires on the substrate in an electric field generated from the electric field generator, horizontally, perpendicularly or at any angle according to the direction of the generated electric field by evaporating the organic solvent from the solution dispersed on the substrate; and
   (c) depositing a metal on the substrate, in order for the nanowires aligned horizontally, perpendicularly or at any angle according to the direction of the generated electric field to be fixed in the aligned direction even in electric field-free conditions.
6. The method for manufacturing a field emitter electrode according to embodiment 5, wherein the electric field generator in the step (a) is an electric field.
7. The method for manufacturing a field emitter electrode according to embodiment 6, wherein the electric field has a magnitude of 1 - 50V/mm.
8. The method for manufacturing a field emitter electrode according to embodiment 5, wherein the step (a) additionally comprises adding a dispersion aid for solvent.
9. The method for manufacturing a field emitter electrode according to embodiment 8, wherein the dispersion aid for solvent is selected from the group consisting of organic solvent TOAB (tetraoctylammonium bromide), and surfactants Triton X-100 and SDS (sodium dodecylsurfate).
10. The method for manufacturing a field emitter electrode according to embodiments 1 or 5, wherein the step (a) of dispersing the solution of nanowires diluted in the organic solvent, on the substrate fixed to the upper part of the electric field generator, is carried out using a method selected from the group consisting of a spin coating method, a spray method, a dip coating method, and an inkjet method.
11. The method for manufacturing a field emitter electrode according to embodiments 1 or 5, wherein the steps (a) and (b) are repeated 5-1000 times to increase the density of the nanowires.
12. The method for manufacturing a field emitter electrode according to embodiments 1 or 5, wherein the solvent in the step (a) is selected from the group consisting of water (H₂O), dimethylformamide (DMF), N-methyl-2-pyrrolidone (NMP), dimethylacetamide (DMAc), cyclohexanone, ethyl alcohol, chloroform, dichloromethane, 1,2-dichlorobenzene and ethyl ether.
13. The method for manufacturing a field emitter electrode according to embodiments 1 or 5, wherein the substrate in the step (a) is selected from the group consisting of indium tin oxide (ITO) glass, glass, quartz, glass wafers, silicon wafers, applied silica, plastics, and transparent polymers.
14. The method for manufacturing a field emitter electrode according to embodiments 1 or 5, wherein the concentration of the nanowire dispersion in the step (a) is 0.01-1.0 wt%.
15. The method for manufacturing a field emitter electrode according to embodiments 1 or 5, wherein the solvent in the step (b) is removed by heating the solution to a temperature of 50-150 °C.
16. The method for manufacturing a field emitter electrode according to embodiments 1 or 5, wherein the amount of the nanowires dispersed on the substrate in the step (a) is 1 pg/cm²-1 g/cm² (amount of nanowires per unit area).
17. The method for manufacturing a field emitter electrode according to embodiments 1 or 5, wherein the metal in the step (c) is deposited to a thickness of 1-5000 nm.
18. The method for manufacturing a field emitter electrode according to embodiments 1 or 5, wherein the metal in the step (c) is selected from the group consisting of titanium (Ti), molybdenum (Mo), gold (Au), silver (Ag), aluminum (Al), calcium (Ca), cadmium (Cd), iron (Fe), nickel (Ni), platinum (Pt), zinc (Zn) and copper (Cu).
19. A filed emitter electrode including magnetic particle-bound nanowires aligned horizontally, perpendicularly or at any angle between horizontal and perpendicular according to the direction of a magnetic field, on a metal-depositting substrate, which is prepared by the method of any one embodiment among embodiments 1 to 18.

## Claims

1. A method for manufacturing a field emitter electrode including nanowires aligned horizontally, perpendicularly or at any angle between horizontal and perpendicular according to the direction of a magnetic field, the method comprising the steps of:
(a) dispersing a solution of nanowires or magnetic particle-bound nanowires diluted in an organic solvent, on a substrate fixed to the upper part of a magnetic field generator;
(b) aligning the nanowires on the substrate in a magnetic field generated from the magnetic field generator, horizontally, perpendicularly or at any angle between horizontal and perpendicular according to the direction of the magnetic field by evaporating the organic solvent from the solution dispersed on the substrate; and
(c) depositing a metal on the substrate, in order for the nanowires aligned horizontally, perpendicularly or at any angle between horizontal and perpendicular according to the direction of the generated magnetic field to be fixed in the aligned direction even in magnetic field- free conditions.

2. The method for manufacturing a field emitter electrode according to claim 1, wherein the magnetic particle-bound nanowires are obtained by binding the magnetic particles to the nanowires using a method which is selected from the group consisting of a method of treating the nanowires with acid, a method of subjecting the magnetic particles to a reduction reaction, and a method of plating the magnetic particles on the nanowires.

3. The method for manufacturing a field emitter electrode according to any one claim among claims 1 and 2, wherein the magnetic particles are iron (Fe)-containing particles.

4. The method for manufacturing a field emitter electrode according to claim 1, wherein the step (a) of dispersing the solution of nanowires diluted in the organic solvent, on the substrate fixed to the upper part of the electric field generator, is carried out using a method selected from the group consisting of a spin coating method, a spray method, a dip coating method, and an inkjet method.

5. The method for manufacturing a field emitter electrode according to claim 1, wherein the steps (a) and (b) are repeated 5-1000 times to increase the density of the nanowires.

6. The method for manufacturing a field emitter electrode according to claim 1, wherein the solvent in the step (a) is selected from the group consisting of water (H2O), dimethylformamide (DMF), N-methyl-2-pyrrolidone (NMP), dimethylacetamide (DMAc), cyclohexanone, ethyl alcohol, chloroform, dichloromethane, 1,2-dichlorobenzene and ethyl ether.

7. The method for manufacturing a field emitter electrode according to claim 1, wherein the substrate in the step (a) is selected from the group consisting of indium tin oxide (ITO) glass, glass, quartz, glass wafers, silicon wafers, applied silica, plastics, and transparent polymers.

8. The method for manufacturing a field emitter electrode according to claim 1, wherein the concentration of the nanowire dispersion in the step (a) is 0.01-1.0 wt%.

9. The method for manufacturing a field emitter electrode according to claim 1, wherein the solvent in the step (b) is removed by heating the solution to a temperature of 50- 150 °C.

10. The method for manufacturing a field emitter electrode according to claim 1, wherein the amount of the nanowires dispersed on the substrate in the step (a) is 1 pg/cm²- 1 g/cm² (amount of nanowires per unit area).

11. The method for manufacturing a field emitter electrode according to claim 1, wherein the metal in the step (c) is deposited to a thickness of 1-5000 nm.

12. The method for manufacturing a field emitter electrode according to claim 1, wherein the metal in the step (c) is selected from the group consisting of titanium (Ti), molybdenum (Mo), gold (Au), silver (Ag), aluminum (Al), calcium (Ca), cadmium (Cd), iron (Fe), nickel (Ni), platinum (Pt), zinc (Zn) and copper (Cu).
